(19) 

Europäisches
Patentamt
European
Patent Office
Office européen
des brevets

(11) **EP 2 835 393 A1**

(12) # EUROPEAN PATENT APPLICATION
published in accordance with Art. 153(4) EPC

(43) Date of publication:
**11.02.2015 Bulletin 2015/07**

(21) Application number: **13771814.4**

(22) Date of filing: **29.03.2013**

(51) Int Cl.:
*C08J 3/20* [(2006.01)]     *B29B 7/90* [(2006.01)]
*B29C 43/34* [(2006.01)]    *C08J 5/00* [(2006.01)]
*C08K 3/04* [(2006.01)]     *C08L 23/12* [(2006.01)]
*C08L 101/00* [(2006.01)]

(86) International application number:
**PCT/JP2013/059523**

(87) International publication number:
**WO 2013/150973 (10.10.2013 Gazette 2013/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.04.2012 JP 2012085274
11.04.2012 JP 2012090254
30.10.2012 JP 2012239156
26.12.2012 JP 2012282561**

(71) Applicant: **Sekisui Chemical Co., Ltd.
Osaka-shi, Osaka 530-8565 (JP)**

(72) Inventors:
• **SAWA, Kazuhiro**
**Mishima-gun**
**Osaka 618-0021 (JP)**

• **TSUMURA, Kensuke**
**Mishima-gun**
**Osaka 618-0021 (JP)**
• **NARUTA, Mitsuru**
**Mishima-gun**
**Osaka 618-0021 (JP)**
• **INUI, Nobuhiko**
**Mishima-gun**
**Osaka 618-0021 (JP)**
• **TAKAHASHI, Katsunori**
**Mishima-gun**
**Osaka 618-0021 (JP)**

(74) Representative: **Merkle, Gebhard
Ter Meer Steinmeister & Partner
Patentanwälte mbB
Mauerkircherstrasse 45
81679 München (DE)**

(54) **PROCESS FOR MANUFACTURING RESIN COMPOSITE MATERIAL, AND RESIN COMPOSITE MATERIAL**

(57)    Provided is a process for manufacturing a resin composite material having high mechanical strength. The process comprises the steps of: preparing a resin composition comprising a carbon material having a graphene structure, a solvent, and a thermoplastic resin; applying a shearing force to a solid of the resin composition so that the total shearing strain, which is a product of shear rate (s-1) and shear time (s), is 80000 or more either at a temperature lower than the melting point of the thermoplastic resin when the thermoplastic resin is crystalline or at a temperature in the vicinity of Tg of the thermoplastic resin when the thermoplastic resin is amorphous; and kneading the resin composition at a temperature equal to or higher than the boiling point of the solvent to obtain the resin composite material.

EP 2 835 393 A1

[FIG. 1]

**Description**

Technical Field

The present invention relates to a process for manufacturing a resin composite material having high mechanical strength, and a resin composite material.

Background Art

In recent years, a so-called nanocomposite in which a nanometer-order filler is dispersed in a thermoplastic resin has attracted attention. Such a nanocomposite can be formed to obtain a formed product in various shapes such as a sheet to thereby increase the physical properties such as mechanical strength of the formed product or impart flexibility to the formed product. In order to obtain such a nanocomposite, a process for dispersing an inorganic filler such as a layered silicate or a carbon nanotube in a thermoplastic resin has been widely studied.

For example, Patent Literature 1 discloses a process for melt-kneading a thermoplastic resin and a layered silicate to thereby obtain a formed product in which the layered silicate is dispersed in the thermoplastic resin. Moreover, Patent Literature 2 discloses a process for melt-kneading a filler comprising a thermoplastic resin and a carbon-based material such as a carbon nanotube and forming the resulting melt-kneaded product to thereby obtain a formed product.

However, an inorganic filler having a size of nanometer order shows strong cohesion in a thermoplastic resin. For this reason, there is a problem that an inorganic filler aggregates in a thermoplastic resin when it is melt-kneaded. Therefore, it is difficult to uniformly disperse the inorganic filler in the thermoplastic resin only by melt-kneading the inorganic filler and the thermoplastic resin as described, for example, in Patent Literatures 1 and 2. It is difficult to obtain a formed product having excellent physical properties such as mechanical strength, even if a resin composite material in which an inorganic filler has aggregated in a thermoplastic resin is formed.

Patent Literature 3 discloses that a composite resin composition is precipitated from a mixed solution of a resin solution and a filler dispersion to thereby obtain a composite resin composition in which a filler is well dispersed in a resin.

Citation List

Patent Literature

Patent Literature 1: Japanese Patent Laid-Open No. 2001-26724
Patent Literature 2: Japanese Patent Laid-Open No. 2008-266577
Patent Literature 3: Japanese Patent Laid-Open No. 2005-264059

Summary of Invention

Technical Problem

However, according to the process described in Patent Literature 3, a solvent may remain in a resin composite material. If the solvent remains in the resin composite material, there is a problem that mechanical strength of the resin composite material will be reduced.

A main object of the present invention is to provide a process for manufacturing a resin composite material having high mechanical strength.

Solution to Problem

The process for manufacturing a resin composite material according to the present invention comprises the steps of: preparing a resin composition comprising a carbon material having a graphene structure, a solvent, and a thermoplastic resin; applying a shearing force to a solid of the resin composition so that the total shearing strain, which is a product of shear rate (s-1) and shear time (s), is 80000 or more either at a temperature lower than the melting point of the thermoplastic resin when the thermoplastic resin is crystalline or at a temperature in the vicinity of Tg of the thermoplastic resin when the thermoplastic resin is amorphous; and kneading the resin composition at a temperature equal to or higher than the boiling point of the solvent to obtain a resin composite material. Note that in the present invention, the shear rate means a value determined from the minimum clearance part between a screw and a barrel. On the other hand, the melting point of a thermoplastic resin means an endothermic peak obtained by differential scanning calorimetry (DSC); and the temperature in the vicinity of Tg means a temperature in the range of ±20°C from the peak temperature of tanδ when measured with a rheometer.

In a particular aspect of the process for manufacturing a resin composite material according to the present invention, the step of preparing the resin composition is performed by mixing a dispersion in which the carbon material having a graphene structure is dispersed in the solvent with the thermoplastic resin in a molten state.

In another particular aspect of the process for manufacturing a resin composite material according to the present invention, a carbon material having a graphene structure is at least one selected from the group consisting of graphite, exfoliated graphite, and graphene.

In another particular aspect of the process for manufacturing a resin composite material according to the present invention, the thermoplastic resin is one resin selected from the group consisting of a polyolefinic resin, polyamide, and an ABS resin.

In another particular aspect of the process for manufacturing a resin composite material according to the present invention, the carbon material having a graphene structure is mixed in an amount ranging from 1 part by mass to 50 parts by mass with 100 parts by mass of the thermoplastic resin, in the step of obtaining a resin composition.

In still another particular aspect of the process for manufacturing a resin composite material according to the present invention, the process simultaneously or further comprises a forming step of forming the resin composite material under a shearing force applied at a shear rate of 15 s$^{-1}$ or less to obtain the resin composite material as a formed product.

In still another particular aspect of the process for manufacturing a resin composite material according to the present invention, a shearing force smaller than the shearing force applied to the solid in the step of applying a shearing force is applied to the resin composite material in the forming step to obtain a formed product.

The resin composite material according to the present invention is a resin composite material comprising a carbon material having a graphene structure and a thermoplastic resin, wherein an area ratio (%) occupied by the carbon material having a thickness of 1 μm or more in a section is [Ar] determined by the following formula (1) or less:

$$[Ar] = (1/5)[X] \quad (1)$$

wherein [X] represents parts by mass of the carbon material per 100 parts by mass of the thermoplastic resin.

In a particular aspect of the resin composite material according to the present invention, the resin composite material has a tensile modulus of elasticity at 23°C of 3.0 GPa or more.

In another particular aspect of the resin composite material according to the present invention, the carbon material having a graphene structure is at least one selected from the group consisting of graphite, exfoliated graphite, and graphene.

In another particular aspect of the resin composite material according to the present invention, the thermoplastic resin is one resin selected from the group consisting of a polyolefinic resin, polyamide, and an ABS resin.

In still another particular aspect of the resin composite material according to the present invention, the carbon material having a graphene structure is contained in an amount ranging from 1 part by mass to 50 parts by mass per 100 parts by mass of the thermoplastic resin.

In still another particular aspect of the resin composite material according to the present invention, provided is a resin composite material which is a formed product in which a proportion of an area occupied by the carbon material having a thickness of 1 μm or more in a section is 10% or less.

Advantageous Effects of Invention

The present invention can provide a process for manufacturing a resin composite material having high mechanical strength.

Brief Description of Drawing

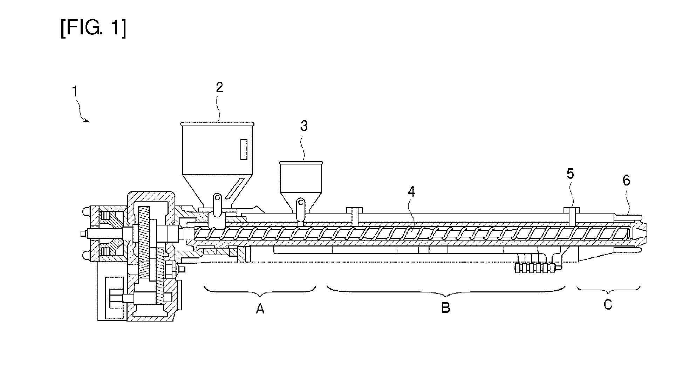

[Figure 1] Figure 1 is a schematic diagram of a twin-screw extruder used in Examples and Comparative Examples.

Description of Embodiments

Hereinafter, the details of the process for manufacturing a resin composite material and the resin composite material of the present invention will be described.

(Process for Manufacturing Resin Composite Material)

The process for manufacturing a resin composite material according to the present invention comprises the steps of: preparing a resin composition comprising a carbon material having a graphene structure, a solvent, and a thermoplastic resin; applying a shearing force to a solid of the resin composition so that the total shearing strain, which is a product of shear rate (s-1) and shear time (s), is 80000 or more at a temperature lower than the melting point of the resin composition; and kneading the resin composition at a temperature equal to or higher than the boiling point of the solvent to obtain a resin composite material.

In the present invention, a resin composition comprising a carbon material having a graphene structure, a solvent, and a thermoplastic resin is first prepared. Preferably, in the step of preparing a resin composition, a dispersion in which the carbon material having a graphene structure is dispersed in the solvent is prepared, and the dispersion is mixed with a thermoplastic resin in a molten state.

Examples of the carbon material having a graphene structure include, but are not limited to, graphite, exfoliated graphite, and graphene. The shape of the carbon material having a graphene structure desirably has, but is not limited to, a layered structure. For example, when a carbon material having a layered structure is combined with a thermoplastic resin to form a sheet of a resin composite material, the smoothness of the surface of the sheet of a resin composite material can be increased, and mechanical strength such as modulus of elasticity can be increased.

The carbon material having a graphene structure is preferably exfoliated graphite. The mechanical strength such as modulus of elasticity of a resin composite material can be effectively increased by using exfoliated graphite. Moreover, a commercially available product of exfoliated graphite is available, and exfoliated graphite can also be manufactured by a conventionally known process.

In the present invention, exfoliated graphite is a stack of graphene sheets each constituted by one layer of graphene. Exfoliated graphite is a stack of graphene sheets which is thinner than original graphite. The number of stacked graphene sheets in exfoliated graphite is two or more, and is generally 200 or less. Exfoliated graphite is obtained by exfoliation of graphite or the like. Exfoliated graphite is obtained, for example, by processes such as a chemical treatment process in which ions such as nitrate ions are inserted between the layers of graphite and then heat-treated, a physical treatment process such as applying an ultrasonic wave to graphite, and an electrochemical process of performing electrolysis using graphite as a working electrode.

Exfoliated graphite has a shape having a high aspect ratio. Therefore, when exfoliated graphite is uniformly dispersed in the resin composite material according to the present invention, its reinforcing effect against an external force exerted in a direction intersecting a stacked plane of exfoliated graphite can be effectively enhanced. Note that if the aspect ratio of exfoliated graphite is too low, its reinforcing effect against an external force exerted in a direction intersecting the stacked plane may be not sufficient. If the aspect ratio of exfoliated graphite is too high, the effect may be saturated, and a further improved reinforcing effect may not be expected. Therefore, the aspect ratio of exfoliated graphite is preferably 50 or more, more preferably 100 or more. The aspect ratio of exfoliated graphite is preferably 500 or less. Note that in the present invention, the aspect ratio refers to the ratio of the maximum size in the direction of the stacked plane of exfoliated graphite to the thickness of exfoliated graphite.

Exfoliated graphite may be surface-modified. Examples of the surface modification include grafting of a resin to the surface of exfoliated graphite and introducing a hydrophilic functional group or a hydrophobic functional group into the surface of exfoliated graphite. The compatibility of exfoliated graphite with a thermoplastic resin can be improved by the surface modification of exfoliated graphite. When the compatibility of exfoliated graphite with a thermoplastic resin is increased, the mechanical strength of a resin composite material is increased.

In order to increase the mechanical strength of a resin composite material, the average particle size of a carbon material having a graphene structure is preferably about 1 to 5 $\mu$m, more preferably about 3 to 5 $\mu$m. Note that the average particle size of a carbon material having a graphene structure is a value observed and determined with a scanning electron microscope (SEM).

The solvent is not particularly limited. In order to uniformly disperse a carbon material having a graphene structure in a solvent, for example, a protonic polar solvent is preferred as a solvent. Examples of the protonic polar solvent include an alcohol such as methanol, ethanol, 1-propanol, and 1-butanol, a carboxylic acid such as acetic acid and formic acid, and water. The solvent may be used singly or in combination of two or more.

When a carbon material having a graphene structure is first dispersed in the solvent to obtain a dispersion, the carbon material having a graphene structure is preferably dispersed in the dispersion in an amount ranging from about 0.1% by mass to 50% by mass. By dispersing the carbon material having a graphene structure in such a range, when a dispersion is mixed with a thermoplastic resin, the carbon material having a graphene structure can be more uniformly and easily dispersed in the thermoplastic resin.

A process for dispersing a carbon material having a graphene structure in a solvent to obtain a dispersion is not particularly limited. For example, a stirring device or the like can be used for dispersion. A known stirring device can be used as a stirring device. Specific examples of the stirring device include a nanomizer, an ultrasonic irradiation apparatus, a ball mill, a sand mill, a basket mill, a triple roll mill, a planetary mixer, a bead mill, and a homogenizer. In order to uniformly disperse the carbon material having a graphene structure in a solvent, an ultrasonic irradiation apparatus is preferred among these stirring devices.

Then, the dispersion is preferably mixed with a molten thermoplastic resin to obtain a resin composition. The thermoplastic resin can be melted by heating.

The thermoplastic resin is not particularly limited, but a known thermoplastic resin can be used as the thermoplastic resin. Specific examples of the thermoplastic resin include polyolefin, polystyrene, polyacrylate, polyacrylonitrile, polyester, polyamide, polyurethane, polyethersulfone, polyetherketone, polyimide, polydimethylsiloxane, and an ABS resin. Moreover, a copolymer of at least two monomers among the monomers constituting these polymers can also be used. The thermoplastic resin may be contained in a resin composite material singly or in combination of two or more.

The thermoplastic resin is preferably polyolefin, polyamide, or an ABS resin. Polyolefin is inexpensive and easily formed under heating. Therefore, the use of polyolefin as a thermoplastic resin can reduce the manufacturing cost of a resin composite material and allows a resin composite material to be easily formed. Moreover, since polyamide and an ABS resin have high mechanical properties in itself, the mechanical properties can be further improved by dispersing a nano-filler.

Examples of polyolefin include polyethylene; polypropylene; polyethylene resins such as an ethylene homopolymer, an ethylene-$\alpha$-olefin copolymer, an ethylene-(meth)acrylic acid copolymer, an ethylene-(meth)acrylate copolymer, and an ethylene-vinylacetate copolymer; polypropylene resins such as a propylene homopolymer, a propylene-$\alpha$-olefin copolymer, a propylene-ethylene random copolymer, and a propylene-ethylene block copolymer; a butene homopolymer; and homopolymers or copolymers of conjugated dienes such as butadiene and isoprene. In order to reduce the manufacturing cost of a resin composite material and to easily mold a resin composite material, polypropylene resins are particularly preferred as a thermoplastic resin.

In the resin composition, the carbon material having a graphene structure is preferably mixed in an amount ranging from about 1 part by mass to 50 parts by mass, more preferably in an amount ranging from about 1 part by mass to 30 parts by mass with 100 parts by mass of a thermoplastic resin. By mixing the carbon material in such a range, mechanical strength such as tensile modulus of elasticity of a resin composite material can be increased.

As described above, in the step of preparing a resin composition, it is desirable that a resin composition be preferably prepared by mixing a dispersion in which a carbon material having a graphene structure is dispersed in a solvent with a thermoplastic resin in a molten state. However, the present invention may include the steps of: preparing the resin composition comprising a carbon material having a graphene structure, a solvent, and a thermoplastic resin without performing a dispersion step; and applying a shearing force to a solid to be described below.

Then, a shearing force is applied to a solid of the resin composition so that the total shearing strain which is the product of shear rate (s-1) and shear time (s) is 80000 or more at a temperature lower than the melting point of the thermoplastic resin contained in the resin composition. The solid of the resin composition is obtained by cooling a resin composition obtained by mixing a dispersion with a molten thermoplastic resin. The cooling of the resin composition may be performed by natural air cooling or by temperature control.

A process of applying the shearing force to the solid of a resin composition is not particularly limited. Examples thereof include a process of performing solid-phase shear extrusion on the solid of a resin composition. In order to more uniformly disperse a carbon material having a graphene structure which has aggregated in the resin composition, when the thermoplastic resin is a crystalline resin, a shearing force is applied to the solid of the resin composition preferably at a temperature lower than the melting point of the thermoplastic resin by 50°C, more preferably at a temperature lower than the melting point of the thermoplastic resin by 70°C. When the thermoplastic resin is an amorphous resin, the kneading is performed at a temperature preferably within ±20°C of the Tg peak temperature, more preferably within ±10°C of the Tg peak temperature. Moreover, the total shearing strain is preferably 120000 or more, more preferably 140000 or more.

The carbon material having a graphene structure aggregated in the resin composition can be dispersed by applying the shearing force as described above to the solid of the resin composition.

Next, the resin composition is kneaded at a temperature equal to or higher than the boiling point of the solvent used for the dispersion to obtain a resin composite material. Thereby, the solvent can be removed from the resin composition while suppressing the aggregation of the carbon material in the resin composition. Thus, a resin composite material excellent in mechanical properties such as the modulus of elasticity and the coefficient of linear expansion can be manufactured.

The temperature for removing the solvent is preferably a temperature higher than the melting point of the thermoplastic resin contained in the resin composition. Thereby, the resin composition can be formed into a resin composite material having a desired shape while removing the solvent from the resin composition.

It is further desirable to perform a forming step of forming the resin composite material under a shearing force further applied at a shear rate of 15 s-1 or less to obtain the resin composite material as a formed product, preferably, simultaneously or after the step of applying a shearing force to the solid as described above. In this case, it is further desirable that the shear rate be 10 s$^{-1}$ or less in order to suppress the reaggregation of the carbon material having a graphene structure. The forming temperature in the forming step is generally 180°C or higher.

A forming process is not particularly limited. For example, a resin composite material can be formed into a desired shape such as a sheet form to obtain a resin formed product in a sheet form or the like by subjecting the resin composite material to press-processing or the like at a temperature equal to or higher than the melting point of the thermoplastic resin.

When applying a shearing force to the resin composite material in the forming step, it is preferred to apply a shearing force smaller than the shearing force applied in the step of applying the shearing force to the solid. Thereby, the dispersed carbon material having a graphene structure can be suppressed from reaggregation in the forming step.

It is preferred to mold a resin composite material under a condition that the shear rate is 15 s$^{-1}$ or less. In this case, a resin composite material is formed under a condition that a high shearing force is not applied in a molten state. As a result, in the present invention, the aggregation of the carbon material having a graphene structure is effectively suppressed in a resin formed product. Therefore, the dispersibility of the carbon material having a graphene structure in the resin formed product is increased, and the mechanical strength of the resin formed product can be further increased. Moreover, since the operation of applying a high shearing force in a molten state when a resin composite material is formed is not performed, local generation of heat hardly occurs, and the molecular chain is hardly cut. Therefore, the resulting formed product is excellent also in heat resistance.

(Resin Composite Material)

The resin composite material according to the present invention comprises the carbon material having a graphene structure and the thermoplastic resin. The resin composite material according to the present invention can be manufactured, for example, by the process for manufacturing a resin composite material according to the present invention.

In the resin composite material according to the present invention, the area ratio (%) occupied by the carbon material having a thickness of 1 $\mu$m or more in the section of the resin composite material is [Ar] to be determined by the following formula (1) or less:

$$[Ar] \ = \ (1/5)[X] \quad (1)$$

wherein [X] represents parts by mass of the carbon material per 100 parts by mass of the thermoplastic resin.

The area ratio (%) occupied by the carbon material having a thickness of 1 $\mu$m or more in the whole section of the resin composite material can be measured as follows. First, the resin composite material is cut at an arbitrary section so that the sectional area may be 9 mm$^2$ or more. Then, the section is photographed at a magnification of 1000 times with a scanning electron microscope (SEM) so that an aggregate of the carbon material having the maximum sectional area that can be observed in the section may be displayed in the observation screen. A carbon material having a thickness of 1 $\mu$m or more in the SEM image of the section photographed in this way is defined as an aggregate. The area ratio (%) occupied by the carbon material having a thickness of 1 $\mu$m or more can be calculated by dividing the area occupied by the aggregate by the whole area of the visual field of the image.

In the resin composite material according to the present invention, the area ratio (%) occupied by the carbon material having a thickness of 1 $\mu$m or more is the [Ar] or less. Therefore, a large amount of the carbon material is finely dispersed to such an extent that the carbon material has a thickness of less than 1 $\mu$m in the section of the resin composite material. That is, in the resin composite material of the present invention, the carbon material is uniformly dispersed in the thermoplastic resin. Consequently, mechanical strength such as tensile modulus of elasticity is increased in the resin composite material according to the present invention.

The tensile modulus of elasticity at 23°C of the resin composite material is preferably 3.0 GPa or more, more preferably 3.5 GPa or more. When the tensile modulus of elasticity at 23°C of the resin composite material is 3.0 GPa or more, the resin composite material can be suitably used for the application of the automobile outer panel and the like in which high tensile modulus of elasticity is required. Note that the tensile modulus of elasticity at 23°C of a conventional resin composite material is 2.3 GPa or less.

Note that when, in the present invention, the forming step of forming the resin composite material at a shear rate of 15 s$^{-1}$ or less is performed as described above, the resin composite material can be obtained as a formed product. In this case, the heat resistance is further increased as described above. In addition, it is desirable that, in the resin composite material as a formed product obtained in this way, the proportion (%) of the area occupied by the carbon material having a thickness of 1 $\mu$m or more in the section be preferably 10% or less of the total sectional area.

Hereinafter, the present invention will be further described in detail based on specific Examples. The present invention is not limited to the following Examples at all but can be implemented by appropriately changing it without departing from the scope of the invention.

[Examples 1 to 9 and Comparative Examples 1 to 7]

(Example 1)

Exfoliated graphite (average thickness: 30 nm, aspect ratio: 170, prepared by the Hammers method) was dispersed in water in an amount of 25% by mass to obtain a dispersion in a slurry form. This dispersion was mixed with a polypropylene resin melted at 180°C (trade name: J-721GR, tensile modulus of elasticity determined by JIS K7113 at 23°C: 1.2 GPa, melting point measured by DSC: 170°C, manufactured by Prime Polymer Co., Ltd.) so as to give 20 parts by mass of the exfoliated graphite to 100 parts by mass of the polypropylene resin to prepare a resin composition. The resulting resin composition was then kneaded in a solid state in a solid-phase shear extruder at the kneading temperature in the solid state of 90°C and the total shearing strain of 82000. The kneaded resin composition was then melt-kneaded at 180°C to remove the solvent to obtain a resin composite material. Then, the resin composite material in a molten state was immediately formed with a hot press apparatus temperature-controlled at 180°C to obtain a resin sheet having a thickness of 0.5 mm.

(Example 2)

A resin sheet was obtained in the same manner as in Example 1 except that ethanol was used instead of water.

(Example 3)

A resin sheet was obtained in the same manner as in Example 1 except that the kneading temperature in a solid state was set to 130°C.

(Example 4)

A resin sheet was obtained in the same manner as in Example 1 except that the filler concentration in the composite was set to 10 phr.

(Example 5)

A resin sheet was obtained in the same manner as in Example 1 except that the total shearing strain was set to 145000.

(Example 6)

A resin sheet was obtained in the same manner as in Example 1 except that the filler was replaced by graphite (trade name: SNO, average thickness: 900 nm, manufactured by SEC Carbon, Ltd.).

(Example 7)

A resin sheet was obtained in the same manner as in Example 1 except that the resin was replaced by HDPE (trade name: HF560, tensile modulus of elasticity: 1.1 GPa, manufactured by Japan Polyethylene Corporation), and the kneading temperature in a solid state was set to 60°C.

(Example 8)

A resin sheet was obtained in the same manner as in Example 1 except that the resin was replaced by PA (trade name: A-125J, tensile modulus of elasticity (when water was absorbed): 1.0 GPa, manufactured by Unitika, Ltd.), and the kneading temperature in a solid state was set to 200°C.

(Example 9)

A resin sheet was obtained in the same manner as in Example 1 except that the resin was replaced by ABS (trade name: S210B, tensile modulus of elasticity: 2.4 GPa, manufactured by UMG ABS, Ltd.), and the kneading temperature in a solid state was set to 100°C.

(Comparative Example 1)

A resin sheet having a thickness of 0.5 mm was obtained in the same manner as in Example 1 except that the kneading temperature was set to 180°C. Note that in Comparative Example 1, since the resin composition was molten at 180°C, the resin composition was not kneaded in a solid state.

(Comparative Example 2)

A resin sheet was obtained in the same manner as in Example 1 except that the total shearing strain was set to 50000.

(Comparative Example 3)

A resin sheet was obtained in the same manner as in Example 4 except that the kneading temperature in a solid state was set to 180°C.

(Comparative Example 4)

A resin sheet was obtained in the same manner as in Example 6 except that the kneading temperature in a solid state was set to 180°C.

(Comparative Example 5)

A resin sheet was obtained in the same manner as in Example 7 except that the kneading temperature in a solid state was set to 160°C.

(Comparative Example 6)

A resin sheet was obtained in the same manner as in Example 8 except that the kneading temperature in a solid state was set to 270°C.

(Comparative Example 7)

A resin sheet was obtained in the same manner as in Example 9 except that the kneading temperature in a solid state was set to 140°C.

[Evaluations of Examples and Comparative Examples]

The following evaluations were respectively performed for each resin sheet obtained in Examples 1 to 9 and Comparative Examples 1 to 7.

(1) Evaluation of the Dispersibility of Exfoliated Graphite

The area ratio (%) occupied by exfoliated graphite having a thickness of 1 $\mu$m or more in a resin sheet was determined as follows. A sample was cut from a resin sheet so that the observation section was parallel to the flow direction of the resin. Next, this section was photographed at a magnification of 1000 times with a scanning electron microscope (SEM) to obtain an image of the section. Next, in this image, the area ratio occupied by exfoliated graphite in the resin sheet was calculated by dividing the area occupied by exfoliated graphite having a thickness of 1 $\mu$m or more by the area of the visual field of the SEM image. The results are shown in Table 1. Note that, in the resin sheets of Examples 1 to 3, 5 to 9 and Comparative Examples 1 to 3, 5 to 7, the [Ar] is determined to be 4 from the above formula (1). The [Ar] of Example 4 and Comparative Example 4 is determined to be 2. The dispersibility of exfoliated graphite was rated as excellent (E), good (G), and poor (P), when the area ratio (%) occupied by exfoliated graphite having a thickness of 1 $\mu$m or more is 4% or less, more than 4% and 10% or less, and more than 10%, respectively. Similarly, in the case of 10 phr, the dispersibility of exfoliated graphite was rated as excellent (E) and poor (P), when the ratio of the area (%) occupied by exfoliated graphite having a thickness of 1 $\mu$m or more is 2% or less and more than 5%, respectively. The results are shown in Table 1.

(2) Evaluation of Tensile Modulus of Elasticity

The tensile modulus of elasticity (GPa) at ordinary temperature of the resin sheets obtained in Examples 1 to 9 and Comparative Examples 1 to 7 was measured according to JIS K7113. The results are shown in Table 1.

[Table 1]

| | Resin | Filler | Filler concentration in composite | Kneading temperature in a solid state | Strain | Solvent | Area ratio occupied by filler having a thickness of 1 mm or more (%) | | Tensile modulus of elasticity (GPa) | Based on |
|---|---|---|---|---|---|---|---|---|---|---|
| Ex. 1 | PP | Exfoliated graphite | 20 | 90 | 82000 | Water | 4 | E | 3.2 | |
| Ex. 2 | PP | Exfoliated graphite | 20 | 90 | 82000 | Ethanol | 3.9 | E | 3.1 | |
| Ex. 3 | PP | Exfoliated graphite | 20 | 130 | 82000 | Water | 6.2 | G | 3.0 | |
| Ex. 4 | PP | Exfoliated graphite | 10 | 90 | 82000 | Water | 1.9 | E | 1.9 | |
| Ex. 5 | PP | Exfoliated graphite | 20 | 90 | 145000 | Water | 3.3 | E | 3.3 | |
| Ex. 6 | PP | Graphite | 20 | 90 | 82000 | Water | 4 | E | 3.0 | |
| Ex. 7 | HDPE | Exfoliated graphite | 20 | 60 | 82000 | Water | 3.9 | E | 2.6 | |
| Ex. 8 | PA | Exfoliated graphite | 20 | 200 | 82000 | Water | 3.8 | E | 2.8 | |
| Ex. 9 | ABS | Exfoliated graphite | 20 | 100 | 82000 | Water | 3.8 | E | 4.1 | |
| | | | | | | | | | | |
| Comp.Ex.1 | PP | Exfoliated graphite | 20 | 180* | 82000 | Water | 12 | P | 2.7 | Ex. 1 |
| Comp.Ex.2 | PP | Exfoliated graphite | 20 | 90 | 50000 | Water | 11 | P | 2.9 | Ex. 1 |
| Comp.Ex.3 | PP | Exfoliated graphite | 10 | 180 | 82000 | Water | 5.2 | P | 1.5 | Ex. 4 |
| Comp.Ex.4 | PP | Graphite | 20 | 180 | 82000 | Water | 13 | P | 2.5 | Ex. 6 |
| Comp.Ex.5 | HDPE | Exfoliated graphite | 20 | 160 | 82000 | Water | 11 | P | 2.1 | Ex. 7 |

EP 2 835 393 A1

(continued)

| | Resin | Filler | Filler concentration in composite | Kneading temperature in a solid state | Strain | Solvent | Area ratio occupied by filler having a thickness of 1 mm or more (%) | | Tensile modulus of elasticity (GPa) | Based on |
|---|---|---|---|---|---|---|---|---|---|---|
| Comp.Ex.6 | PA | Exfoliated graphite | 20 | 270 | 82000 | Water | 12 | P | 2.3 | Ex. 8 |
| Comp.Ex.7 | ABS | Exfoliated graphite | 20 | 140 | 82000 | Water | 13 | P | 3.7 | Ex. 9 |
| * Kneaded not in a solid state but in a molten state. | | | | | | | | | | |

[Examples 10 to 13 and Comparative Examples 8 to 19]

(Synthesis Example of Filler)

The filler used in Examples and Comparative Examples was manufactured as follows. To 115 ml of 65% by mass concentrated sulfuric acid was added 2.5 g of graphite single crystal powder (SNO-5, manufactured by SEC Carbon, Ltd.), and the mixture was stirred with cooling in a water bath at 10°C. Next, to the resulting mixture was gradually added 15 g of potassium permanganate with stirring, and the mixture was allowed to react with each other for 30 minutes at 35°C. Next, to the resulting reaction mixture was gradually added 230 g of water, and the mixture was allowed to react with each other for 15 minutes at 98°C. Then, to the reaction mixture were added 700 g of water and 45 g of 30% by mass aqueous hydrogen peroxide to stop the reaction. Next, the reaction mixture was centrifuged for 30 minutes at a rotational speed of 14000 rpm. Next, the separated graphite oxide was sufficiently washed with 5% by mass dilute hydrochloric acid and water and then dried. The resulting dried graphite oxide was dispersed in water to give a content of 2 mg/ml. This dispersion was irradiated with an ultrasonic wave to exfoliate and fragment the graphite oxide at the layer interfaces, thus obtaining exfoliated graphite having oxidized layer planes. Note that, for irradiation of the ultrasonic wave, an ultrasonic washing machine was used under a condition of 45 kHz and 600 W. Next, hydrazine was added to the exfoliated graphite having oxidized layer planes to reduce it for 10 minutes. Next, filters each having a pore size of 100 $\mu$m, 50 $\mu$m, 20 $\mu$m, or 10 $\mu$m (all are manufactured by ADVANTEC Co., Ltd.) were used in decreasing order of the pore size to classify the reduced exfoliated graphite. Then, the classified exfoliated graphite was dried to obtain the filler (exfoliated graphite) used in Examples and Comparative Examples.

(Example 10)

A dispersion step was performed, in which a mixture of 100 parts by mass of polypropylene (trade name: MA3H, tensile modulus of elasticity at 23°C as determined by JIS K7113-1995: 1.8 GPa, density: 0.9 g/cm$^3$, melting point measured by DSC: 170°C, and MFR = 10 g/min, manufactured by Japan Polypropylene Corporation) and 20 parts by mass of the filler obtained above (exfoliated graphite, average size of graphene layer planes in the plane direction: 5 $\mu$m, number of stacked graphene layers: 90 layers, aspect ratio: 180) was kneaded in the shear kneading section of a twin-screw extruder 1 as shown in Figure 1 for 5 minutes at a temperature of 130°C to thereby disperse the filler. Note that in the twin-screw extruder 1, the diameter of a screw 4 was 15 mm, and the effective length of the screw 4/diameter of the screw 4 was 60. The temperature in each section was set as follows: the temperature of a feed section A at 80 to 130°C; the temperature of the shear kneading section B at 50 to 130°C; and the temperature of a discharge part C at 150°C.
Next, a forming step of pressing the mixture to form a sheet was performed to obtain a resin formed product in a sheet form having a thickness of 0.5 mm. Note that in the pressing, a spacer having a thickness of 0.5 mm was used, and the remaining heat was applied for 2 minutes at 180°C, followed by applying a pressure of 100 kPa for 3 minutes.

(Example 11)

The dispersion step was performed in the same manner as in Example 10 except that polyamide (trade name: "1300S", tensile modulus of elasticity at 23°C determined by JIS K7113-1995: 2.7 GPa, density: 1.14 g/cm$^3$, coefficient of linear expansion: 8 x 10$^{-5}$/K, manufactured by Asahi Kasei Corporation) was used instead of polypropylene, and the dispersion temperature was changed from 130°C to 200°C. Note that, with respect to the temperature of each section of the twin-screw extruder in the dispersion step, the temperature of the feed section A was set to 150 to 200°C; the temperature of the shear kneading section B was set to 130 to 200°C; and the temperature of the discharge section C was set to 220°C.
Next, a resin formed product in a sheet form having a thickness of 0.5 mm was obtained in the same manner as in Example 10 except that the forming temperature was changed from 180°C to 270°C.

(Example 12)

The dispersion step was performed in the same manner as in Example 10 except that an ABS resin (trade name: S210B, tensile modulus of elasticity at 23°C determined by JIS K7113-1995: 2.3 GPa, density: 1.07 g/cm$^3$, coefficient of linear expansion: 8.5 x 10$^{-5}$/K, MFR = 25 g/min, manufactured by UMG ABS, Ltd.) was used instead of polypropylene, and the dispersion temperature was changed from 130°C to 100°C. Note that, with respect to the temperature of each section of the twin-screw extruder in the dispersion step, the temperature of the feed section A was set to 80 to 100°C; the temperature of the shear kneading section B was set to 70 to 100°C; and the temperature of the discharge section C was set to 120°C.

Next, a resin formed product in a sheet form having a thickness of 0.5 mm was obtained in the same manner as in Example 10 except that the forming temperature was changed from 180°C to 150°C.

(Example 13)

The dispersion step was performed in the same manner as in Example 10 except that high density polyethylene (trade name: HF560, tensile modulus of elasticity at 23°C determined by JIS K7113-1995: 1.1 GPa, density: 0.96 g/cm$^3$, melting point measured by DSC: 134°C, MFR = 7.0 g/min, manufactured by Japan Polyethylene Corporation) was used instead of polypropylene, and the dispersion temperature was changed from 130°C to 100°C. Note that, with respect to the temperature of each section of the twin-screw extruder in the dispersion step, the temperature of the feed section A was set to 80 to 100°C; the temperature of the shear kneading section B was set to 70 to 100°C; and the temperature of the discharge section C was set to 120°C.
Next, a resin formed product in a sheet form having a thickness of 0.5 mm was obtained in the same manner as in Example 10 except that the forming temperature was changed from 180°C to 160°C.

(Comparative Example 8)

A resin formed product in a sheet form having a thickness of 0.5 mm was obtained in the same manner as in Example 10 except that the dispersion step was followed by a step of melting the mixture by heating to 200°C and melt-kneading the molten mixture with a plastomill for 5 minutes under a condition of a shear rate of about 90 s$^{-1}$.

(Comparative Example 9)

A resin formed product in a sheet form having a thickness of 0.5 mm was obtained in the same manner as in Comparative Example 8 except that the time of melt kneading was set to 10 minutes.

(Comparative Example 10)

The dispersion step of dispersing a filler under a condition that a resin composition is not in a molten state was not performed, and a mixture of a polypropylene resin and a filler was melt-kneaded with a plastomill under a condition of a temperature of 200°C and a shear rate of about 90 s$^{-1}$. Then, a resin formed product in a sheet form having a thickness of 0.5 mm was obtained in the same manner as in Example 10.

(Comparative Example 11)

A resin formed product in a sheet form having a thickness of 0.5 mm was obtained in the same manner as in Example 11 except that, after the dispersion step and before the press-forming, the mixture was melted by heating to a temperature of 270°C and melt-kneaded with a plastomill for 5 minutes under a condition of a shear rate of about 90 s$^{-1}$.

(Comparative Example 12)

A resin formed product in a sheet form having a thickness of 0.5 mm was obtained in the same manner as in Comparative Example 11 except that the time of melt-kneading was set to 10 minutes.

(Comparative Example 13)

A resin formed product in a sheet form having a thickness of 0.5 mm was obtained by press-forming after performing the melt-kneading step in the same manner as in Comparative Example 11 without performing the dispersion step.

(Comparative Example 14)

A resin formed product in a sheet form having a thickness of 0.5 mm was obtained in the same manner as in Example 12 except that, after the dispersion step and before the press-forming, the mixture was melted by heating to a temperature of 150°C and melt-kneaded with a plastomill for 5 minutes under a condition of a shear rate of about 90 s$^{-1}$.

(Comparative Example 15)

A resin formed product in a sheet form having a thickness of 0.5 mm was obtained in the same manner as in Comparative Example 14 except that the time of melt-kneading was set to 10 minutes.

(Comparative Example 16)

A resin formed product in a sheet form having a thickness of 0.5 mm was obtained by press-forming after performing the melt-kneading step in the same manner as in Comparative Example 14 without performing the dispersion step.

(Comparative Example 17)

A resin formed product in a sheet form having a thickness of 0.5 mm was obtained in the same manner as in Example 13 except that, after the dispersion step and before the press-forming, the mixture was melted by heating to a temperature of 160°C and melt-kneaded with a plastomill for 5 minutes under a condition of a shear rate of about 90 s$^{-1}$.

(Comparative Example 18)

A resin formed product in a sheet form having a thickness of 0.5 mm was obtained in the same manner as in Comparative Example 17 except that the time of melt-kneading was set to 10 minutes.

(Comparative Example 19)

A resin formed product in a sheet form having a thickness of 0.5 mm was obtained by press-forming after performing the melt-kneading step in the same manner as in Comparative Example 17 without performing the dispersion step.

(Measurement of Tensile Modulus of Elasticity)

The tensile modulus of elasticity of the resin formed products obtained in Examples 10 to 13 and Comparative Examples 8 to 19 was measured according to JIS K7113-1995. The results are shown in Table 2.

(Measurement of Area Ratio Occupied by Aggregate)

The resin formed products obtained in Examples 10 to 13 and Comparative Examples 8 to 19 were cut in the sheet thickness direction. The resulting cut surface was photographed at a magnification of 1000 times with a scanning electron microscope (SEM). The area occupied by the filler aggregate observed in the SEM image of the photographed section was measured. At this time, the aggregate was defined as that having a thickness of 1 μm or more. The area occupied by the aggregate having a thickness of 1 μm or more in the SEM image of the section was measured. Next, the proportion (%) of the area occupied by the aggregate was calculated by dividing the area occupied by the aggregate by the area of the whole visual field of the SEM image. The results are shown in Table 2.

[Table 2]

| | Composition of resin formed product | | | Dispersion step | | Melt-kneading | | Forming step | Evaluation | |
|---|---|---|---|---|---|---|---|---|---|---|
| | Resin | | Filler (parts by mass) | Dispersion time (min) | Dispersion temperature (°C) | Kneading time (min) | Kneading temperature (°C) | Forming temperature (°C) | Proportion of the area occupied by aggregate (%) | Tensile modulus of elasticity (GPa) |
| | Type | Parts by mass | | | | | | | | |
| Ex. 10 | PP | 100 | 20 | 5 | 130 | - | - | 180 | 3.9% | 3.3 |
| Comp.Ex.8 | PP | 100 | 20 | 5 | 130 | 5 | 200 | 200 | 7.8% | 2.8 |
| Comp.Ex.9 | PP | 100 | 20 | 5 | 130 | 10 | 200 | 200 | 8.3% | 2.7 |
| Comp.Ex.10 | PP | 100 | 20 | Nothing | | 5 | 200 | 200 | 15.6% | 1.9 |
| | | | | | | | | | | |
| Ex. 11 | PA | 100 | 20 | 5 | 200 | - | - | 270 | 3.8% | 4.1 |
| Comp.Ex.11. | PA | 100 | 20 | 5 | 200 | 5 | 270 | 270 | 7.6% | 3.9 |
| Comp.Ex.12 | PA | 100 | 20 | 5 | 200 | 10 | 270 | 270 | 8.0% | 3.8 |
| Comp.Ex.13 | PA | 100 | 20 | Nothing | | 5 | 270 | 270 | 15.5% | 3.1 |
| | | | | | | | | | | |
| Ex. 12 | ABS | 100 | 20 | 5 | 100 | - | - | 150 | 3.9% | 4.0 |
| Comp.Ex.14 | ABS | 100 | 20 | 5 | 100 | 5 | 150 | 150 | 8.1% | 3.7 |
| Comp.Ex.15 | ABS | 100 | 20 | 5 | 100 | 10 | 150 | 150 | 8.2% | 3.6 |
| Comp.Ex.16 | ABS | 100 | 20 | Nothing | | 5 | 150 | 150 | 16.1% | 2.9 |
| | | | | | | | | | | |
| Ex. 13 | HDPE | 100 | 20 | 5 | 100 | - | - | 160 | 4.0% | 2.5 |
| Comp.Ex.17 | HDPE | 100 | 20 | 5 | 100 | 5 | 160 | 160 | 8.1% | 2.2 |
| Comp.Ex.18 | HDPE | 100 | 20 | 5 | 100 | 10 | 160 | 160 | 8.1% | 2.1 |
| Comp.Ex.19 | HDPE | 100 | 20 | Nothing | | 5 | 160 | 160 | 15.9% | 1.8 |

The meaning of the abbreviations of the resins in Table 2 is as follows.

PP: Polypropylene, PA: Polyamide, ABS: ABS resin, HDPE: High density polyethylene.

Reference Signs List

1 ... Twin-screw extruder
2 ... Raw material hopper
3 ... Side feeder
4 ... Screw
5 ... Vent
6 ... Gate valve
A ... Feed section
B ... Shear kneading section
C ... Discharge section

**Claims**

1. A process for manufacturing a resin composite material, the process comprising the steps of:

   preparing a resin composition comprising a carbon material having a graphene structure, a thermoplastic resin, and a solvent;
   applying a shearing force to a solid of the resin composition so that total shearing strain, which is a product of shear rate (s-1) and shear time (s), is 80000 or more either at a temperature lower than a melting point of the thermoplastic resin when the thermoplastic resin is crystalline or at a temperature in the vicinity of Tg of the thermoplastic resin when the thermoplastic resin is amorphous; and
   kneading the resin composition at a temperature equal to or higher than a boiling point of the solvent to obtain the resin composite material.

2. The process for manufacturing a resin composite material according to claim 1, wherein the step of preparing the resin composition is performed by mixing a dispersion in which the carbon material having a graphene structure is dispersed in the solvent with the thermoplastic resin in a molten state.

3. The process for manufacturing a resin composite material according to claim 1, wherein the carbon material having a graphene structure is at least one selected from the group consisting of graphite, exfoliated graphite, and graphene.

4. The process for manufacturing a resin composite material according to any one of claims 1 to 3, wherein the thermoplastic resin is one resin selected from the group consisting of a polyolefinic resin, polyamide, and an ABS resin.

5. The process for manufacturing a resin composite material according to any one of claims 1 to 4, wherein, in the step of preparing the resin composition, the carbon material having a graphene structure is mixed in an amount ranging from 1 part by mass to 50 parts by mass with 100 parts by mass of the thermoplastic resin.

6. The process for manufacturing a resin composite material according to any one of claims 1 to 5, further comprising a forming step of forming the resin composite material under a shearing force applied at a shear rate of 15 s$^{-1}$ or less to obtain the resin composite material as a formed product.

7. The process for manufacturing a resin composite material according to claim 6, wherein, in the forming step, a shearing force smaller than the shearing force applied to the solid in the step of applying a shearing force is applied to the resin composite material to obtain a formed product.

8. A resin composite material comprising a carbon material having a graphene structure and a thermoplastic resin, wherein an area ratio (%) occupied by the carbon material having a thickness of 1 $\mu$m or more in a section is [Ar] determined by the following formula (1) or less:

$$[Ar] = (1/5)[X] \quad (1)$$

wherein [X] represents parts by mass of the carbon material per 100 parts by mass of the thermoplastic resin.

9. The resin composite material according to claim 8, wherein the resin composite material has a tensile modulus of elasticity at 23°C of 3.0 GPa or more.

10. The resin composite material according to claim 8 or 9, wherein the carbon material having a graphene structure is at least one selected from the group consisting of graphite, exfoliated graphite, and graphene.

11. The resin composite material according to any one of claims 8 to 10, wherein the thermoplastic resin is one resin selected from the group consisting of a polyolefinic resin, polyamide, and an ABS resin.

12. The resin composite material according to any one of claims 8 to 11, wherein the carbon material having a graphene structure is contained in an amount ranging from 1 part by mass to 50 parts by mass per 100 parts by mass of the thermoplastic resin.

13. The resin composite material according to any one of claims 8 to 12, wherein the resin composite material is a formed product in which a proportion of an area occupied by the carbon material having a thickness of 1 $\mu$m or more in a section is 10% or less.

[FIG. 1]

## INTERNATIONAL SEARCH REPORT

| International application No. |
|---|
| PCT/JP2013/059523 |

### A. CLASSIFICATION OF SUBJECT MATTER
*C08J3/20*(2006.01)i, *B29B7/90*(2006.01)i, *B29C43/34*(2006.01)i, *C08J5/00* (2006.01)i, *C08K3/04*(2006.01)i, *C08L23/12*(2006.01)i, *C08L101/00*(2006.01)i

According to International Patent Classification (IPC) or to both national classification and IPC

### B. FIELDS SEARCHED

Minimum documentation searched (classification system followed by classification symbols)
C08J3/20, B29B7/90, B29C43/34, C08J5/00, C08K3/04, C08L23/12, C08L101/00

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2011-213987 A  (Toyota Boshoku Corp.), 27 October 2011 (27.10.2011), claims 1 to 7; paragraphs [0005] to [0007], [0036] to [0042], [0056] to [0058] (Family: none) | 1-13 |
| Y | JP 2012-62453 A  (Sekisui Chemical Co., Ltd.), 29 March 2012 (29.03.2012), claims 1 to 8; paragraphs [0018] to [0025] (Family: none) | 1-13 |
| Y | JP 2008-266577 A  (National Institute of Advanced Industrial Science and Technology), 06 November 2008 (06.11.2008), paragraphs [0021] to [0028] & US 2009/0123731 A1    & US 2011/0124793 A1 | 1-13 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 May, 2013 (23.05.13) | 04 June, 2013 (04.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/059523

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-307863 A  (Yugen Kaisha KCK Oyo Gijutsu Kenkyusho), 25 December 2008 (25.12.2008), entire text; all drawings (Family: none) | 1-13 |
| A | JP 2002-347020 A  (Yugen Kaisha KCK Oyo Gijutsu Kenkyusho), 04 December 2002 (04.12.2002), entire text; all drawings (Family: none) | 1-13 |
| A | JP 2004-155078 A  (Nihon Tetra Pak Kabushiki Kaisha), 03 June 2004 (03.06.2004), entire text; all drawings (Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001026724 A
- JP 2008266577 A
- JP 2005264059 A